# EUROPEAN PATENT APPLICATION

(11) **EP 4 760 875 A1**
(43) Date of publication of application: **17.06.2026**
(21) Application number: 25176587.1
(22) Date of filing: 15.05.2025
(51) Int. Cl.: H01M 10/625, A62C 3/07, B60L 58/26, H01M 10/6568

(54) **ELECTRIC ENERGY STORAGE DEVICE WITH SYSTEM FOR INSERTING AN EMERGENCY COOLANT**

(30) Priority: 10.12.2024 IT 202400028062
(71) Applicant: Fast Charge Engineering S.r.l., 00162 Roma (IT)
(72) Inventor: GIANNINI, Marco, 00162 Roma (IT)
(74) Representative: Studio Torta S.p.A.

(57) **Abstract**

There is described an electrical energy storage device (8) for a vehicle comprising an outer casing delimiting an interior space; a plurality of electrochemical and/or electrostatic storage cells housed in the interior space; and an emergency conduit (12) connected to the outer casing of the device and being in fluidic connection with the interior space. The emergency conduit (12) is configured to introduce in an emergency a refrigerant fluid through the emergency conduit (12) directly into the interior space to at least partially fill the interior space with the refrigerant fluid and to decrease the temperature of the electrochemical or electrostatic storage cells and/or to extinguish a fire in the electrical energy storage device itself.

## Description

### CROSS-REFERENCE TO RELATED APPLICATIONS

This patent application claims priority from Italian patent application no. 102024000028062 filed on December 10, 2024, the entire disclosure of which is incorporated herein by reference.

### TECHNICAL FIELD

The present invention relates to a system for introduction into the container of electrical energy storage systems, mainly for electrical and hybrid vehicles, **i.e.** stationary storage systems.

The present invention can be advantageously applied to hybrid and full electric vehicles to which the description below will explicitly refer, without loss of generality.

### BACKGROUND ART

A hybrid vehicle comprises an internal combustion engine, and at least one electric drive electrically powered by an electrical energy storage device. Normally, the electrical energy storage device comprises at least one electrochemical battery pack, i.e. electrostatic storage systems.

An electric vehicle comprises at least one electric drive electrically powered by an electrical energy storage device as already described.

In general, an electrical energy storage device is inserted inside a vehicle or inside a structure that protects it from external agents, such as impacts, shocks and weather conditions.

In the specific practice of storage systems, there is the possibility of a storage device being taken to conditions in which a fire occurs. In the chemistry of the most widely used batteries, there is the chance that, in case in which, due to mechanical damage (coming from the outside) or electrical damage (generally rare, coming from the battery itself due to incorrect use or manufacturing defects) fuel and oxidizer are produced, in order to extinguish the resulting fire the only option is to exhaust all the energy contained in the batteries.

Generally, the extinguishing liquid can be water or water-based.

In the non-limiting case of a car with an electrical energy storage device, this device is generally housed under the chassis of the vehicle and in any case in a position protected from most of the shocks that a vehicle may sustain. The protected position of the storage device prevents easy access by firefighters in the case of a fire occurring and the use of an extinguishing fluid being necessary. The extinguishing fluid sprayed onto the vehicle would not come into direct contact with the storage device, which is well protected by the metal plates of the car.

Similarly, in a storage device the battery is not exposed but will always be contained inside a casing, which is in turn protected; this casing will always act as a barrier to the extinguishing liquids used by firefighters.

Firefighters from all over the world use nozzles and high pressure hoses capable of spraying refrigerant fluid, generally water, at a pressure of around 10 bar.

The patent CN113557629A describes a system that creates an access route to the casing of the storage device, allowing the introduction of refrigerant fluid. The system described in this patent is operated via an overpressure produced by the hoses of firefighters. In this patent, the material with which the rupture cap is made is metal, preferably steel, preferably with a concave shape, which can have a pre-weakened line to facilitate calibrated rupture of the cap. This patent has two large problems: the first is that firefighters must be aware of the exact position of the rupture device inside each vehicle, or they will be unable to direct the jet of extinguishing fluid in the direction of the device. The second problem derives from the position of the storage device inside cars, generally well protected by the chassis, which in fact prevents firefighters from easily accessing the area with the device. A further problem is represented by the possibility of objects being between the safety device and the nozzle of the firefighters, and in this case the pressure of the refrigerant fluid might not be sufficient to break the rupture cap. Ultimately, the device is difficult to use.

The patent FR 2987701 describes a similar device to the one above, the difference being that the material of which the cap is made is a thermal fusible material; in this case the fire inside the storage device melts the material of the cap and firefighters are able to spray the storage device even without high precision of the jet of water. In this invention the problems related to the position of the device are similar to those previously described. Added to this is the problem that, if the occupants of a vehicle are inside it when a fire breaks out, they would be struck by the toxic gases produced by combustion and also by the flames.

The patent FR1902568 describes a system similar to the previous ones, and also in this case the pressure of the jet of extinguishing liquid opens the emergency device. The pressure on the surface of the device might not be sufficient to open it due to its position which is not easy to reach, and moreover this position prevents simple and effective use of the fire hose (which should be operated very close to the vehicle).

The patent FR3105598A1 describes a mechanism that opens an access route present in the casing of the storage device by applying a pressure exerted from the outside via a jet of refrigerant fluid. Elastic systems are used for this device. The problems encountered by this solution are the same as above.

The patent US20150056481A1 describes a solution in which the casing of the storage device is provided with a thermal fusible valve that melts when the fire inside the casing reaches the predetermined temperature. This mechanism is also provided with a second valve located in the passenger compartment, in a position coherent with the position located on the upper part of the casing of the storage device, so as to be melted in turn after the valve located on the storage device has melted. In this system, the main problem is that when the valve located in the passenger compartment melts, the passengers are exposed to toxic fumes and flames. Secondly, the presence of the valve inside the luggage compartment means that it cannot be accessed by firefighters if there are objects present in the compartment.

The patent WO2013190216A1 describes a device similar to the one above: a thermal fusible cap positioned in the upper part of the casing of the storage device with the storage device positioned under the passenger compartment. The problem of this device concerns the entry of smoke and flames in the passenger compartment if the occupants have not abandoned the vehicle.

All the patents and the inventions listed above have numerous problems: they are difficult for firefighters to locate, some are difficult to operate as they must be impacted by a pressurized jet (possible obstructions), and some have the risk of flames and smoke entering the vehicle.

### DESCRIPTION OF THE INVENTION

The object of the present invention is to provide an electrical energy storage device equipped with an emergency cooling system, said emergency cooling system allowing a refrigerant fluid to be introduced inside the casing of the electrical energy storage device, which is without the drawbacks described above and, at the same time, is easy and inexpensive to produce.

According to the present invention, a conduit is used, preferably made of a material suitable to withstand high temperatures, for example preferably made of a material resistant to temperatures exceeding 600°C, preferably an inexpensive material, preferably metal, such that the firefighters can easily access this conduit from the outside of the vehicle via a nozzle of suitable length capable of preventing risks for the firefighters reaching the vehicle when the flames are already rampant.

According to the present invention, there is provided an electrical energy storage device equipped with an emergency cooling system for the introduction of a refrigerant fluid, as claimed hereunder.

According to the present invention, there is provided an electrical energy storage device, as claimed in the appended independent claim. Alternative preferred embodiments are protected in the respective dependent claims.

The aforesaid objects are achieved by the present invention, as it relates to a vehicle as claimed in claim 8 or 9.

### BRIEF DESCRIPTION OF THE DRAWINGS

The present invention will now be described with reference to the accompanying drawings, which illustrate a non-limiting example of embodiment thereof, wherein:
- Fig. 1 is a schematic plan view of a hybrid drive road vehicle;
- Fig. 2 is a schematic plan view of an electric drive road vehicle;
- Figs. 3A and 3B represent a schematic view of a casing for electrical energy storage systems viewed from the outside;
- Fig. 4 is a schematic plan view of a road vehicle, clearly showing the electrical energy storage device of the invention.
- Fig. 5 is a schematic side view of a road vehicle, clearly showing the electrical energy storage device of the invention.
- Fig. 6 is a schematic sectional view of the insertion point of the emergency nozzle;
- Fig. 7 is a schematic side view of the insertion point of the emergency nozzle;
- Fig. 8 is a schematic perspective view of an operation to extinguish a fire using the device.

### PREFERRED EMBODIMENTS OF THE INVENTION

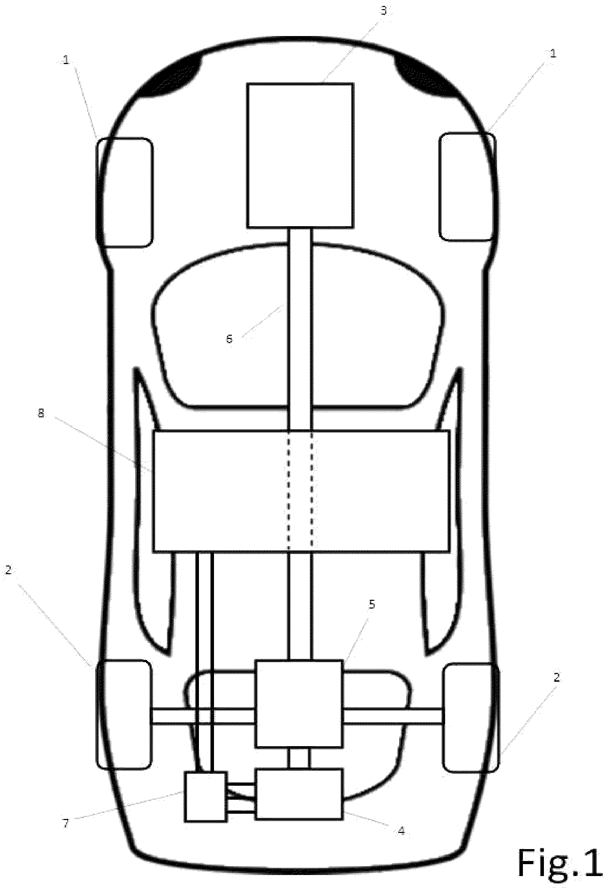

Fig. 1 indicates, as a whole, a hybrid drive vehicle, provided with two front wheels 1 and two rear driving wheels 2. An internal combustion engine 3, an electrical machine 4, a differential 5, a drive shaft 6, an inverter 7 and an electrical energy storage device 8 are present.

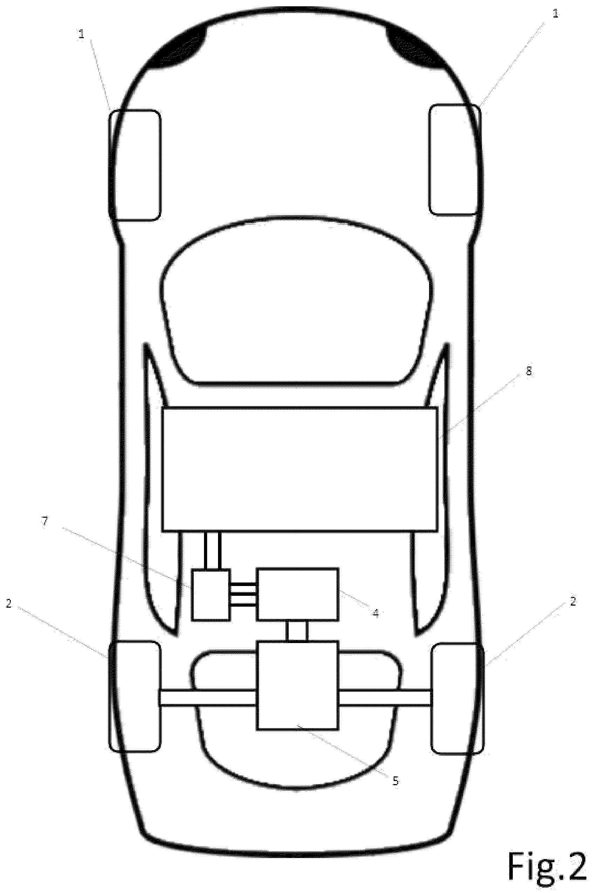

Fig. 2 indicates, as a whole, an electric drive vehicle, provided with the elements indicated with the numbers similarly to the above.

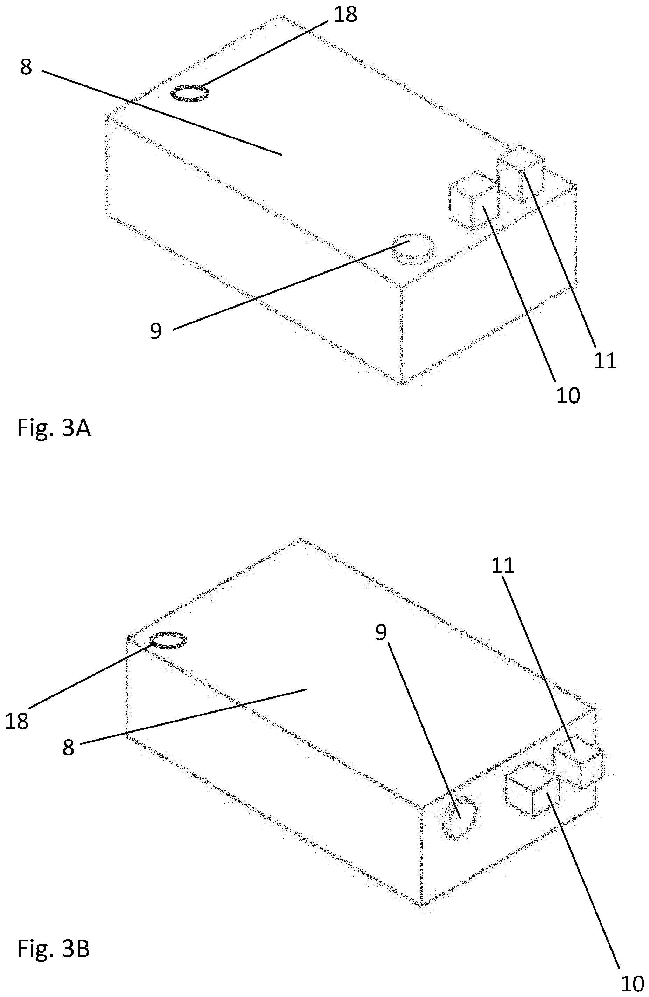

Figs. 3A and 3B schematically represent two electrical energy storage systems in non-limiting form. The figures show attachment points 10 and 11 of the storage device with the electrical circuit of the vehicle and with the hydraulic circuit, where present. Preferably, the attachment points consist of specifically designed connections that are of electrical or hydraulic type. Preferably, electrical connections can be low voltage, or control, and high voltage, or power. Preferably, the hydraulic connections are those that concern the ordinary cooling system of the electrical energy storage device. The figures show an attachment point 9 to the emergency cooling system. The coupling point to the emergency cooling system is preferably composed of a flange made of material that is not thermally fusible at the typical temperatures of a fire; preferably, it must withstand temperatures exceeding 600°C. The coupling device of the conduit preferably contains, inside the flange, a thermal fusible bulkhead that can melt at a controlled temperature, preferably, of around 100°C. The figures show a refrigerant fluid outlet point 18, positioned in the part opposite the inlet hole in the attachment point 9 such as to allow the discharge of excess liquid, ensuring a continuous inflow of fresh refrigerant fluid. The outlet point 18 preferably consists of the same thermal fusible bulkhead, preferably circular in shape, used in the bulkhead of the point 9. The outlet point 18 must not be located close to holes that can conduct fumes or flames into the passenger compartment via other components of the vehicle which are in turn thermal fusible. The bulkhead made of thermal fusible material located inside the flange of the attachment point 9 has the additional function of preventing materials or fluids from entering if there is no fire inside the casing of the electrical energy storage device.

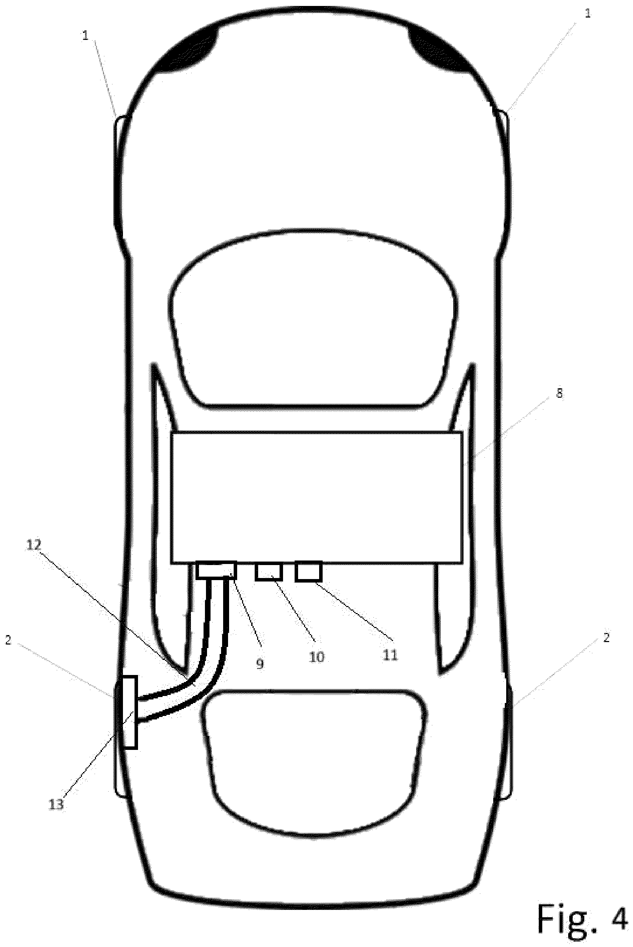

Fig. 4 schematically represents a car composed of the elements as indicated above. In the figure it is evident that a conduit 12 is connected to the coupling point to the emergency cooling system, preferably with a circular section and preferably made of a metal suitable not to melt at the temperatures of a common fire, for example, but without limitation, preferably able to withstand temperatures exceeding 600°C, which is in turn connected to the emergency inlet point 13. The emergency inlet point 13 is preferably located close to the rear wheel arch, preferably on the vehicle body of the vehicle. The point 13 preferably consist of a preferably pre-weakened portion of vehicle body that allows access to the conduit 12. Weakening of the vehicle body in the inlet point 13 is preferably implemented such as to allow the vehicle body to be broken using the tools normally available to firefighters, preferably a metal nozzle. The length of the metal nozzle must preferably allow a minimum distance from the car that keeps the firefighter safe.

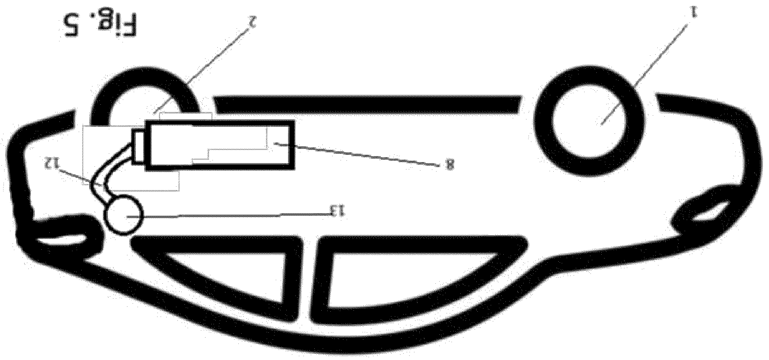

Fig. 5 represents a side view of a car with the components described above. In the figure, the electrical energy storage device is preferably positioned under the passenger seat, the inlet, consisting of the attachment point 9, to the casing is positioned at the rear and connected via a flange to the conduit 12, which is in turn connected to the emergency inlet 13.

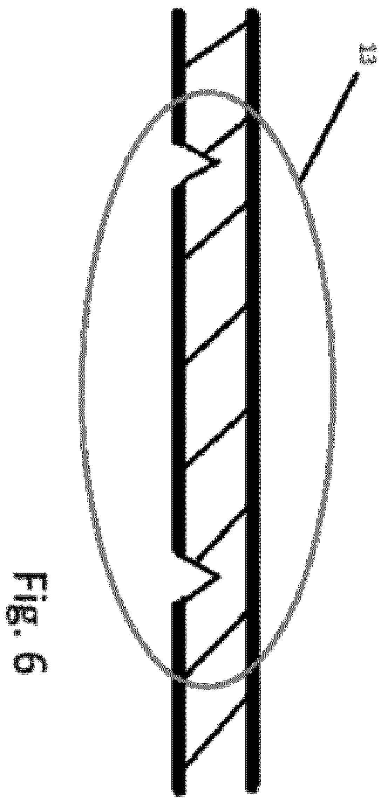

Fig. 6 represents a sectional view of a possible solution for weakening the emergency inlet point 13 by reducing the thickness of the material of the vehicle body. Reduction of the material of the vehicle body can be implemented in various ways; at the level of non-limiting example, it can be lightened by pressing, as non-limiting example it can be laser-etched on the inner part. The weakening lines 14 are sized to allow a firefighter to break them using tools already available and preferably with a nozzle of suitable length. The weakened parts are preferably sized to allow a firefighter to break the emergency inlet point 13 and allow access to the conduit 12.

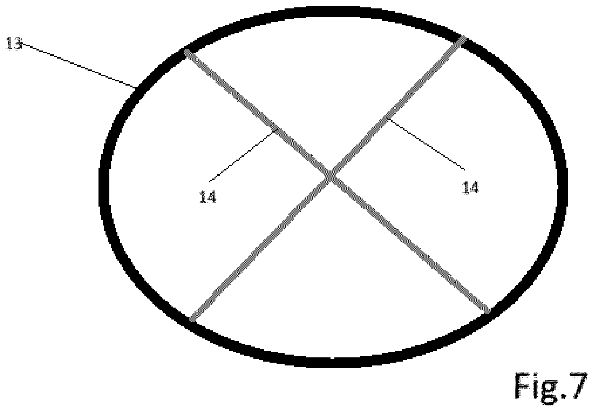

Fig. 7 shows a possible diagram for the pre-weakening lines to be implemented on the vehicle body at the emergency inlet point 13. The weakening lines 14 can be implemented in many ways, as described above.

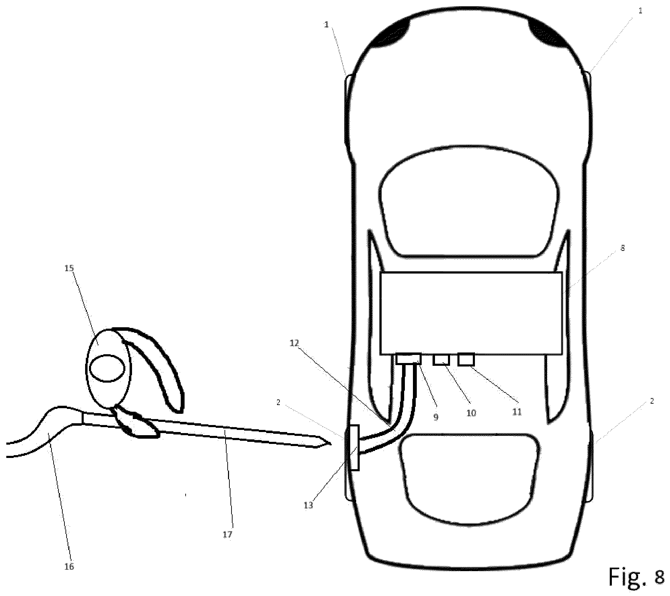

Fig. 8 shows, schematically and without limitation, a possible use of the device as a whole. The firefighter 15 preferably equipped with a nozzle 17, preferably metal and preferably with suitable electrically isolating handgrips, in turn connected to the hose 16 available to firefighters throughout the world, breaks the emergency inlet point 13 using the nozzle 17. After breaking the emergency point 15 the firefighter can introduce refrigerant liquid, preferably water, into the conduit and hence inside the casing of the electrical energy storage device while keeping at a safe distance.

According to the present invention, there is also provided an electrical energy storage device for a vehicle. The electrical energy storage device comprises:
- an outer casing delimiting an interior space;
- a plurality of electrochemical and/or electrostatic storage cells housed in the interior space; and
- an emergency conduit connected to the outer casing of the device and being in fluidic connection with the interior space.

The emergency conduit is configured to introduce in an emergency a refrigerant fluid through the emergency conduit directly into the interior space to at least partially fill the interior space with the refrigerant fluid and to decrease the temperature of the electrochemical or electrostatic storage cells and/or to extinguish a fire in the electrical energy storage device itself.

The advantage of this invention derives from the fact that the refrigerant fluid is introduced directly inside the casing containing the plurality of storage cells, the heart of the fire. A further advantage lies in the fact that firefighters can act directly inside the casing while keeping at a safe distance.

A further advantage is represented by the possibility of using a limited amount of refrigerant liquid compared to the solutions currently available.

An advantage lies in the fact that firefighters can easily access the conduit 12 from the outside of the vehicle via a nozzle of suitable length to prevent risks for the firefighters themselves reaching the vehicle when the flames are already rampant.

Moreover, the firefighter who comes to extinguish a fire in a car equipped whit the electrical energy storage device 8 can easily break the closure element, for example using a metal nozzle of suitable length.

The electrical energy storage device comprising the emergency conduit 12 comprises an inlet opening 13 and preferably, but not necessarily, an outlet opening, in the attachment point 9; wherein the inlet opening 13 is configured to receive, during an emergency, the refrigerant fluid and the outlet opening in the attachment point 9 is configured to direct the refrigerant fluid into the interior space; wherein the emergency conduit 12 is configured to be positioned such that the inlet opening 12 is positioned at a vehicle body.

The emergency opening 13 ensures that the conduit 12 is isolated and cannot be accessed by fluids or foreign bodies, either erroneously or intentionally. The emergency opening 13 is calibrated so that it can be opened by a firefighter using a nozzle that firefighters are equipped with.

Preferably, but not necessarily, the emergency inlet 13 has pre-weakened points 14, sized to be broken by a firefighter with the use of a nozzle.

The electrical energy storage device may comprise a second bulkhead, i.e., the thermal fusible refrigerant fluid outlet point 18 having the same characteristics as the bulkhead contained in the attachment point 9. This bulkhead can preferably be used for discharging the refrigerant fluid introduced from the attachment point 9 in order to avoid overpressures in the conduit 12 ensuring a continuous inflow of fresh refrigerant liquid. This bulkhead, the presence of which is preferable but not necessary, allows fresh refrigerant fluid to be continuously introduced into the storage device. A further advantage is represented by the fact that the introduction of fresh fluid allows more effective extinguishing of the fire. A further advantage relates to the easier introduction of fluid inside the casing of the storage device.

## Claims

1. An electrical energy storage device (8) for a vehicle comprising:
- an outer casing delimiting an interior space;
- a plurality of electrochemical and/or electrostatic storage cells housed in the interior space; and
- an emergency conduit (12) connected to the outer casing of the device and being in fluidic connection with the interior space; wherein the emergency conduit (12) is configured to introduce in an emergency a refrigerant fluid through the emergency conduit (12) directly into the interior space to at least partially fill the interior space with the refrigerant fluid and to decrease the temperature of the electrochemical or electrostatic storage cells and/or to extinguish a fire in the electrical energy storage device itself.

2. An electrical energy storage device according to claim 1 comprising an attachment point (9) to the outer casing of the electrical energy storage device, such that a thermal fusible bulkhead is present.

3. An electrical energy storage device according to any of the preceding claims; wherein the emergency conduit (12) comprises an inlet opening (13), and preferably but not necessarily an outlet opening, at the attachment point (9); wherein the inlet opening (13) is configured to receive, during an emergency, refrigerant fluid and the outlet opening at the attachment point (9) is configured to direct the refrigerant fluid into the interior space; wherein the emergency conduit (12) is configured such that the inlet opening (12) is positioned at a vehicle body.

4. An electrical energy storage device according to any one of the preceding claims, further comprising a closure member disposed at the emergency inlet opening (13), wherein the closure member comprises a plurality of pre-weakened points (14), in particular sized to be broken with the use of a nozzle by a firefighter.

5. An electrical energy storage device according to any of the preceding claims which may comprise a second bulkhead, namely the thermal fusible refrigerant fluid outlet point (18) has the same characteristics as the bulkhead contained in the attachment point (9); in particular said second bulkhead can preferably be used for discharging the refrigerant fluid introduced from the connection point (9) in order to avoid overpressure in the conduit (12) ensuring a continuous inflow of fresh refrigerant fluid.

6. An electrical energy storage device according to any of the preceding claims, wherein the emergency conduit (12) is made of a material suitable to withstand flames and temperatures of a fire connected to the outer casing of the storage system (8).

7. An electrical energy storage device according to claim 6, wherein the emergency conduit (12) is made of a material resistant to temperatures exceeding 600°C.

8. A vehicle equipped with a vehicle body comprising at least one storage device according to any one of the preceding claims.

9. A vehicle according to claim 8 provided with 4 wheels.
